# EUROPEAN PATENT SPECIFICATION

(11) **EP 1 315 372 B1**
(45) Date of publication and mention of the grant of the patent: **05.05.2010**
(21) Application number: 01956954.0
(22) Date of filing: 20.08.2001
(51) Int. Cl.: H04N 5/91

(54) **DECODING DEVICE**
DEKODIERVORRICHTUNG
DISPOSITIF DE DECODAGE

(30) Priority: 25.08.2000 JP 2000255395
(43) Date of publication of application: 28.05.2003
(73) Proprietor: Panasonic Corporation, Kadoma-shi Osaka 571-8501 (JP)
(72) Inventor: KUBOTA, Kosuke, Yokosuka-shi, Kanagawa 239-0828 (JP); NAGATA, Hideki, Matto-shi, Ishikawa 924-0043 (JP); KAYADA, Tadashi, Kanazawa-ku, Yokohama-shi, Kanagawa 236- (JP); MACHIDA, Yutaka, Konan-ku, Yokohama-shi, Kanagawa 233-000 (JP); YUKITAKE, Takeshi, Asahi-ku, Yokohama-shi, Kanagawa 241-081 (JP)
(74) Representative: Grünecker, Kinkeldey, Stockmair & Schwanhäusser Anwaltssozietät
(86) International application number: PCT/JP2001/007102
(87) International publication number: WO 2002/017630

(56) References cited:
- WO-A-99/63773
- JP-A- 5 145 876
- JP-A- 6 130 910
- JP-A- 10 222 136
- JP-A- 10 229 560
- JP-A- 2000 101 969
- JP-A- 2001 125 531

## Description

### Technical Field

The present invention relates to a decoding apparatus.

### Background Art

In general, image data is repeatedly transferred to an electronic apparatus having a TV set, a display device such as a liquid crystal panel, and the like with each timing, which is formed of a refresh cycle fixed not to cause variations on a display screen page. In this case, it is necessary to operate a circuit that transfers image data to the display device with a high frequency, and this may result in an increase of power consumption.

JP-A-2000101969 discloses a system in which several memories are used for performing backward reproduction of encoded data obtained by compressing image data such as MPEG systems. When decoding is performed up to an image which is to be reproduced and the decoding of the image is completed, the decoding is temporarily stopped and the image is read from the memory and is shown. Subsequently, the decoding processing is resumed.

JP-A-10229560 discloses an image processing unit to display simultaneously plural moving images stored in the same storage medium on a single display screen.

One of electronic apparatuses that have taken measures against this problem is disclosed in, for example, Unexamined Japanese Patent Publication HEI No. 6-130910 (matrix display device, matrix display controller, and matrix display driving apparatus). This device adopts a configuration comprising internal storage means built in an LCD module that displays an image and external storage means for image data connected to a system bus that controls a MPU (Micro Processor Unit), thereby carrying out image data transfer between internal storage means and external storage means intermittently. A high frequency clock that is necessary for this intermittent image data transfer is generated only when image data transfer is carried out. The activation of a high-frequency clock generator and the execution of image data transfer are carried out when a dedicated circuit monitors the operation of a system bus to which external storage means is connected and MPU detects that the content of internal storage means has been changed.

In a system where the number of fames per unit time of image data to be coded for transmission as in MPEG-4 varies by complexity of image to be coded and an extent of the motion thereof, etc, the execution of intermittent image data transfer is effective in improving a reduction in power consumption.

However, this kind of electronic apparatus needs the high-frequency clock generator that operates intermittently and the circuit that monitors the operation of the bus for controlling the operation of the high-frequency clock generator. Generally, in the electronic apparatus comprising a decoding apparatus that decodes image data coded in MPEG-4, there is the high-frequency clock generator that always operates to activate the decoding apparatus. For this reason, provision of the high-frequency clock generator, which intermittently operates specifically for the display device, may cause trouble in a reduction of power consumption. Moreover, this increases a processing load required for monitoring MPU, so that effective use of MPU cannot be made in some cases.

### Disclosure of Invention

It is an object of the present invention is to provide decoding apparatus that are capable of transferring image data intermittently to a display device without providing an auxiliary circuit to the outer section to make it possible to miniaturize a mobile terminal device for image communication and to improve a reduction in power consumption.

The above object can be attained when decoded image data is stored until an amount of image data reaches a predetermined value and image data is transferred to the display device at the time when the amount of image data reaches the predetermined value. The invention is set out in claims 1 and 3.

### Brief Description of Drawings

FIG. 1 is a block diagram showing a configuration of an electronic apparatus according to Embodiment 1 of the present invention;
FIG. 2 is a timing chart explaining the operations of the electronic apparatus of FIG. 1;
FIG. 3 is a timing chart explaining the operations of the electronic apparatus of FIG. 1;
FIG. 4 is a timing chart explaining the operations of the electronic apparatus of FIG. 1; and
FIG. 5 is a block diagram showing a cellular phone to which the electronic apparatus of Embodiment 2 of the present invention is applied.

### Best Mode for Carrying Out the Invention

The main point of the present invention is to transfer image data to a display device intermittently without providing an auxiliary circuit to the outer section, and to miniaturize a mobile terminal device for image communication and to improve a reduction in power consumption.

The following will specifically explain the embodiments of the present invention with reference to the drawings accompanying herewith.

### (Embodiment 1)

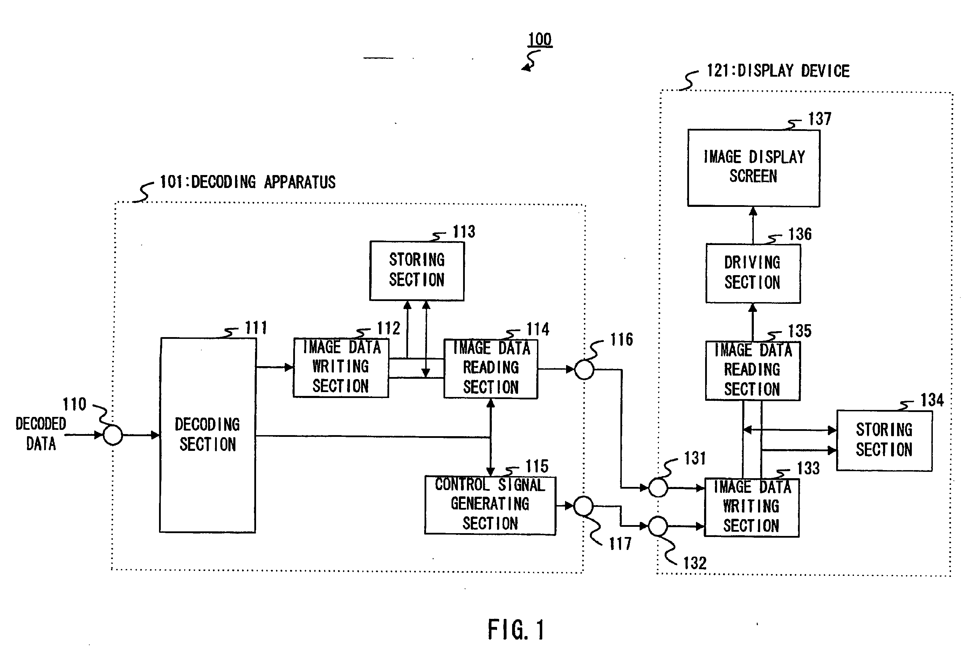

FIG. 1 is a block diagram showing a configuration of an electronic apparatus according to Embodiment 1 of the present invention. An electronic apparatus 100 of FIG. 1 mainly comprises a decoding apparatus 101 and a display device 121. The decoding apparatus 101 and display device 121 are used in communication terminals for mobile communication such as a cellular phone, a mobile television telephone, etc. or stationary telephone, television telephone, TV set, computer, and information terminal device having a computer function, which are connected by a cable.

In FIG. 1, the decoding apparatus 101 comprises a coded data input section 110 that inputs coded data obtained by coding image data, a decoding section 111 that decodes image data from coded data, a storing section 113 that stores decoded image data, and an image data writing section 112 that writes decoded image data to the storing section 113. The decoding apparatus 101 further comprises an image data reading section 114 that reads image data written to the storing section 113 for each notification from the decoding section 111, a control signal generating section 115 that generates a control signal for each notification from the decoding section 111, an image data output section 116 that outputs image data sent from the reading section 114 to a display device 121, and a control signal output section 117 that outputs a control signal sent from the control signal generating section 115 to the display device 121.

The display device 121 comprises an image data input section 131 that inputs image data output from the image data output section 116, a control signal input section 132 that inputs a control signal output from the control signal output section 117, a storing section 134 that stores decoded image data, and an image data writing section 133 that writes decoded image data to the storing section 134. The display device 121 further comprises an image data reading section 135 that reads image data written to the storing section 134, and a driving section 136 that drives an image display screen 137 based on image data read by the image data reading section 135.

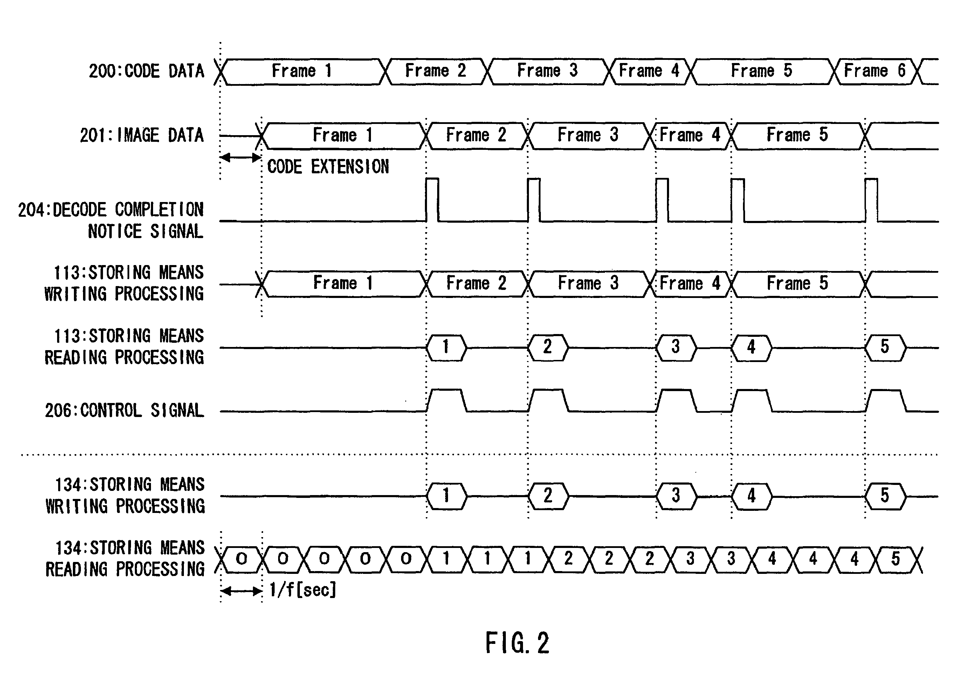

FIG. 2 is a timing view explaining the operation of the electronic apparatus 100 of FIG. 1. In FIG. 2, coded data 200, which is obtained by coding image data, is coded by a variable length coding system, for example, MPEG-4. It is assumed that the amount of coded data is different from one frame to another, and that the number of frames per unit time is not kept constant by the features such as complexity of coded image data and the extent of motion.

Coded data 200 is input to the decoding section 111 via the coded data input section 110. The decoding section 111 decodes inputted coded data 200 to image data 201. After decode delay required for decoding, the decoding section 111 outputs image data 201 to the image data writing section 112 whenever necessary. Then, the decoding section 111 outputs a decode completion notice signal 204 to the image data reading section 114 and control signal generating section 115 every time when outputting a predetermined amount of image data 201 (for example, an amount corresponding to one frame).

The image data writing section 112 writes image data 201 to the storing section 113 whenever necessary. The image data reading section 114 operates intermittently with timing when the decode completion notice signal 204 is input thereto. Then, the image data reading section 114 reads a predetermined amount of image data 201 and outputs it to the image data output section 116 from the storage section 113. The control signal generating section 115 generates a control signal 206 that instructs a new portion in image data decoded by decoding means. Then, the control signal generating section 115 outputs the control signal 206 to the control signal output section 117 from the image data output section 116 with timing when the image data reading section 114 inputs the decode completion notice signal 204.

Image data 201 is input to the image data writing section 133 via the image data output section 116, image data input section 131. The control signal 206 is input to the image data writing section 133 via the control signal input section 132.

The image data writing section 133 of display device 121 operates intermittently with timing when the control signal 206 is input. Then, the image data writing section 133 writes only a portion, which is instructed by the control signal 206 in the image data 201 that is input from the image data input section 131, to the storing section 134. The image data reading section 135 reads image data 201 from the storing section 134 repeatedly at a cycle of a constant frame frequency fHz, which is fixed not to cause variations on the image display screen 137. Then, the image data reading section 135 outputs the resultant to the driving section 136. The driving section 136 drives the image display screen 137 based on the input image data 201.

Thus, according to this embodiment, the amount of decoded image data is stored until the amount reaches a predetermined value, and when the amount reaches the predetermined value, image data is transferred to the display device, making it possible to intermittently transfer image data to the display device from the decoding apparatus with a simple configuration. Moreover, it is possible to transfer image data asynchronously and intermittently regardless of (1/f) sec, which is decided as an inverse of frame frequency fHz with which the image display screen 137 of display device 121 is driven.

In addition, both storing section 113 and storing section 134 are configured to have a single port. However, the present invention may be configured such that one of the storing sections has a dual port or both have a dual port, respectively. The dual port configuration makes it possible for both the image data writing section 112 (133) and the image data reading section 114 (135) to gain access to the storing section 113 (134) concurrently, resulting in a reduction of operation clocks.

Moreover, the time required for the image data reading section 114 to read the predetermined amount of image data from the storing section 113 and the time required for the image data writing section 133 to write the predetermined amount of image data to the storing section 133 are set to be below (1/f) sec. This makes it possible to rewrite image data without causing variations on the display in a state that the storing section 134 is configured to have a single buffer.

Moreover, the aforementioned embodiment presents the configuration in which the decode completion notice signal is output every time when the decoding section 111 outputs a predetermined amount of image data 201. However, the present invention may have a configuration in which a write completion notice signal is output to the image data reading section 114 and the control signal generating section 115 every time when the image data writing section 112 writes a predetermined amount of image data 201.

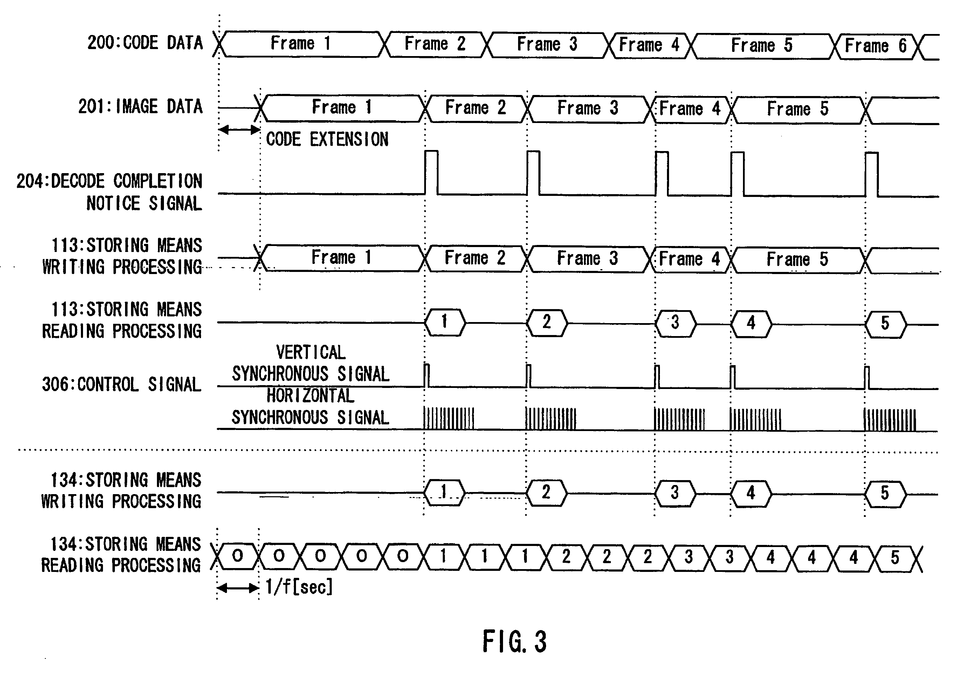

Moreover, according to the present invention, even if a synchronous signal such as a general horizontal synchronous signal or vertical synchronous signal, serving as an image signal, is used as a control signal 306 in place of the control signal 206 shown in FIG. 2, the same effect can be obtained as illustrated in the timing chart of FIG. 3.

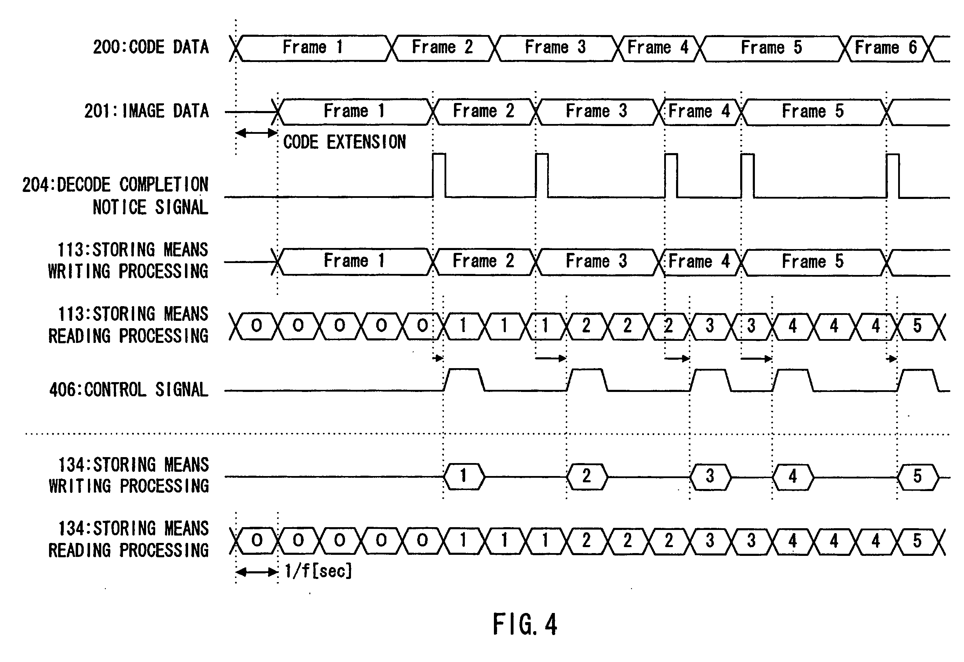

Still moreover, according to the present invention, the decoding section 111 outputs the decode completion notice signal 204 to only the control signal generating section 115. Then, as illustrated in the timing chart of FIG. 4, the image data reading section 114 continuously reads image data from the storing section 113, and the control signal generating section 115 may output a control signal 406, which is valid only for a period of time when image data newly updated is output.

### (Embodiment 2)

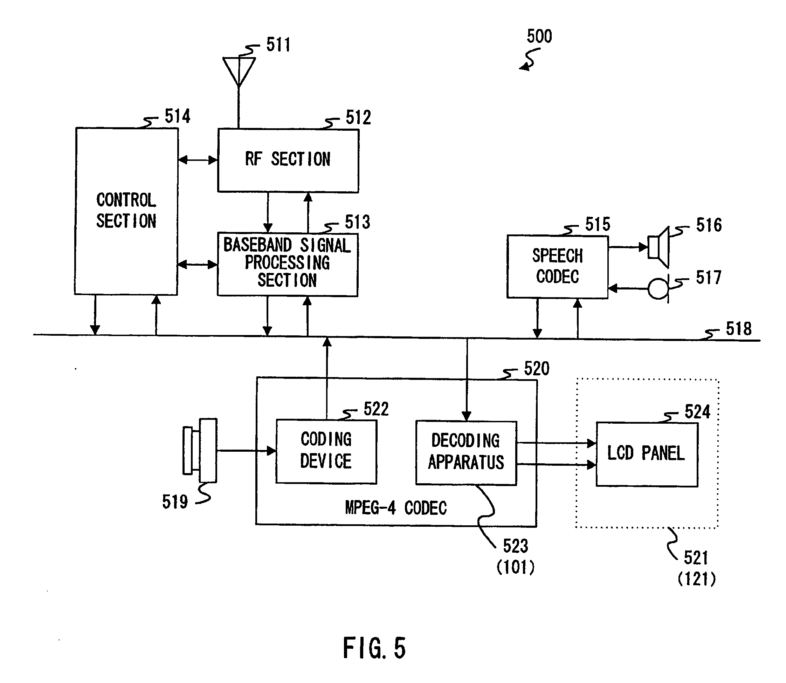

Embodiment 2 shows a configuration of a cellular phone, which is more specific application example than Embodiment 1 of FIG. 5, and the explanation will be given as follows.

An image communicable cellular phone 500 comprises an antenna 511, a RF section 512, a baseband signal processing section 513, a control section 514, a speech codec 515, a speaker 516, and a microphone 517. The cellular phone 500 further comprises a system bus 518, a camera 519, an MPEG-4 codec 520, and a display device 521 corresponding to the display device 121 of FIG. 1. The MPEG-4 codec 520 includes a coding device 522 and a decoding apparatus 523 corresponding to the decoding apparatus 101 of FIG. 1. The main part of display device 521 is formed of an LCD panel 524, and the LCD 524 is connected to the decoding apparatus 523.

A signal received by the antenna 511 is subjected to predetermined radio processing by the RF section 512, and the resultant is separated into speech coded data and image coded data by the baseband signal processing section 513. Speech coded data output from the baseband signal processing section 513 is input to the speech codec 515 via the system bus 518, and the resultant is decoded to speech data by the speech codec 515, and output as a speech from the speaker 516.

The speech collected by the microphone 517 is converted into speech coded data by the speech codec 515. The speech coded data output from the speech codec 515 is input to the baseb and signal processing section 513 via the system bus 518.

The speech coded data output from the baseband signal processing section 513 is input to the decoding apparatus 523 via the system bus 518. Moreover, an image taken by the camera 519 is converted into image coded data by the coding device 522, and the resultant is input to the baseband signal processing section 513 or the decoding apparatus 523 via the system bus 518.

Speech coded data and image coded data input to the baseband signal processing section 513 are multiplexed by the baseband signal processing section 513, and the resultant is subjected to predetermined radio processing by the RF section 512, and radio transmitted from the antenna 511.

Image coded data input to the decoding apparatus 523 is decoded to image data as explained in Embodiment 1, and the resultant is intermittently output to the LCD panel 524 of display device 521. At this time, a control signal is also generated at the decoding apparatus 523, and the control signal is output to the LCD panel 524 of display device 521 from the decoding apparatus 523 in synchronization with the output of image data.

In this way, since image data is transferred to the display device 521 from the decoding apparatus 523 via not system bus, no load is put on other processing of the cellular phone device 500 at all.

In addition, the cellular phone was explained as an example in the aforementioned embodiment. The present invention can be used in communication terminals such as a cellular phone for mobile communication, mobile television telephone, etc. or stationary telephone, television telephone, TV set, computer and information terminal device having a computer function, which are connected by a cable.

As is obvious from the aforementioned explanation, according to the present invention, it is possible to transfer image data to a display device intermittently without providing an auxiliary circuit to the outer section and to miniaturize a mobile terminal device for image communication, and to improve a reduction in power consumption, resulting in a reduction of a processing load required to monitor MPU.

This application is based on the Japanese Patent Application No. 2000-255395 filed on August 25, 2000.

### Industrial Applicability

The present invention is suitable for use in communication terminals such as a cellular phone for mobile communication, mobile television telephone, etc. or stationary telephone, television telephone, TV set, computer and information terminal device having a computer function, which are connected by a cable.

## Claims

1. A decoding apparatus (101) for decoding coded image data (200) and outputting said obtained image data to a display device, said decoding apparatus comprising:
decoding means (111) for decoding coded data obtained by a coding system where a number of frames per unit time varies;
image data writing means (112) for writing said image data (201), decoded by said decoding means, to memory (113); and
image data reading means (114) for reading said image data written to said memory,
**characterized in that**
a first signal (204) is output to said image data reading means by said decoding means every time when an output of image data of a predetermined amount of image data is completed,
said image data reading means intermittently reads said image data and outputs the read image data to the display device every time when said first signal is input to the image data reading means.

2. The decoding apparatus according to claim 1, further comprising control signal generating means (115) for generating a control signal (206) that instructs a new portion in image data decoded by said decoding means, wherein the first signal is output to said control signal generating means by said decoding means every time when an output of said predetermined amount of image data is completed, and
said control signal generating means outputs said control signal every time when said first signal is input.

3. A decoding apparatus (101) for decoding coded image data (200) and outputting said obtained image data to a display device, said decoding apparatus comprising:
decoding means (111) for decoding coded data obtained by a coding system where a number of frames per unit time varies;
image data writing means (112) for writing said image data (201), decoded by said decoding means, to memory (113); and
image data reading means (114) for reading said image data written to said memory,
**characterized in that**
a first signal (204) is output to said image data reading means by said image data writing means every time when writing of said image data of a predetermined amount of image data is completed, and
said image data reading means intermittently reads said image data and outputs the read image data to the display device every time when said first signal is input to the image data reading means.

4. The decoding apparatus according to claim 3, further comprising control signal generating means (115) for generating a control signal (206) that instructs a new portion in image data decoded by said decoding means, wherein the first signal is output to said control signal generating means by said image data writing means every time when writing of said predetermined amount of image data is completed, and
said control signal generating means outputs said control signal every time when said first signal is input.

5. The decoding apparatus according to one of claims 1 to 4, wherein the decoding apparatus is part of a radio communication terminal apparatus.

## Patentansprüche

1. Decodiervorrichtung (101) zum Decodieren codierter Bilddaten (200) und zum Ausgeben der gewonnenen Bilddaten an eine Anzeigeeinrichtung, wobei die Decodiervorrichtung umfasst:
eine Decodiereinrichtung (111) zum Decodieren codierter Daten, die mit einem Codiersystem gewonnen werden, bei dem eine Anzahl von Frames pro Zeiteinheit variiert;
eine Bilddaten-Schreibeinrichtung (112) zum Schreiben der mit der Decodiereinrichtung decodierten Bilddaten (201) in einen Speicher (113); und
eine Bilddaten-Leseeinrichtung (114) zum Lesen der in den Speicher geschriebenen Bilddaten,
**dadurch gekennzeichnet, dass**
ein erstes Signal (204) durch die Decodiereinrichtung immer dann an die Bilddaten-Leseeinrichtung ausgegeben wird, wenn eine Ausgabe von Bilddaten einer vorgegebenen Menge an Bilddaten abgeschlossen ist,
die Bilddaten-Leseeinrichtung die Bilddaten intermittierend liest und die gelesenen Bilddaten immer dann an die Anzeigeeinrichtung ausgibt, wenn das erste Signal in die Bilddaten-Leseeinrichtung eingegeben wird.

2. Decodiervorrichtung nach Anspruch 1, die des Weiteren eine Steuersignal-Erzeugungseinrichtung (115) zum Erzeugen eines Steuersignals (206) umfasst, das einen neuen Teil durch die Decodiereinrichtung decodierter Bilddaten in Auftrag gibt, wobei das erste Signal durch die Decodiereinrichtüng immer dann an die Steuersignal-Erzeugungseinrichtung ausgegeben wird, wenn eine Ausgabe der vorgegebenen Menge an Bilddaten abgeschlossen ist, und
die Steuersignal-Erzeugungseinrichtung das Steuersignal immer dann ausgibt, wenn das erste Signal eingegeben wird.

3. Decodiervorrichtung (101) zum Decodieren codierter Bilddaten (200) und zum Ausgeben der gewonnenen Bilddaten an eine Anzeigeeinrichtung, wobei die Decodiervorrichtung umfasst:
eine Decodiereinrichtung (111) zum Decodieren codierter Daten, die mit einem Codiersystem gewonnen werden, bei dem eine Anzahl von Frames pro Zeiteinheit variiert;
eine Bilddaten-Schreibeinrichtung (112) zum Schreiben der mit der Decodiereinrichtung decodierten Bilddaten (201) in einen Speicher (113); und
eine Bilddaten-Leseeinrichtung (114) zum Lesen der in den Speicher geschriebenen Bilddaten,
**dadurch gekennzeichnet, dass**
ein erstes Signal (204) durch die Bilddaten-Schreibeinrichtung immer dann an die Bilddaten-Leseeinrichtung ausgegeben wird, wenn Schreiben der Bilddaten einer vorgegebenen Menge an Bilddaten abgeschlossen ist,
die Bilddaten-Leseeinrichtung die Bilddaten intermittierend liest und die gelesenen Bilddaten immer dann an die Anzeigeeinrichtung ausgibt, wenn das erste Signal in die Bilddaten-Leseeinrichtung eingegeben wird.

4. Decodiervorrichtung nach Anspruch 3, die des Weiteren eine Steuersignal-Erzeugungseinrichtung (115) zum Erzeugen eines Steuersignals (206) umfasst, das einen neuen Teil durch die Decodiereinrichtung decodierter Bilddaten in Auftrag gibt, wobei das erste Signal durch die Bilddaten-Schreibeinrichtung immer dann an die Steuersignal-Erzeugungseinrichtung ausgegeben wird, wenn Schreiben der vorgegebenen Menge an Bilddaten abgeschlossen ist, und
die Steuersignal-Erzeugungseinrichtung das Steuersignal immer dann ausgibt, wenn das erste Signal eingegeben wird.

5. Decodiervorrichtung nach einem der Ansprüche 1 bis 4, wobei die Decodiervorrichtung Teil einer Funkkommunikations-Endgerätvorrichtung ist.

## Revendications

1. Un appareil de décodage (101) pour décoder des données image codées (200) et sortir les dites données image obtenues sur un écran, le dit appareil de décodage comprenant :
un moyen de décodage (111) pour décoder des données codées obtenues par un système de codage dans lequel le nombre de trame par unité de temps varie ;
un moyen d'écriture de données image (112) pour écrire les dites données image (201), décodées par le dit moyen de décodage, dans une mémoire (113) ; et
un moyen de lecture de données image (114) pour lire les dites données image écrites dans la dite mémoire,
**caractérisé en ce que**
un premier signal (204) est sorti vers le dit moyen de lecture de données image par le dit moyen de décodage chaque fois qu'une sortie de données image d'une quantité prédéterminée de données image est complète,
le dit moyen de lecture de données image lit de façon intermittente les dites données image et sort les données image lues vers l'écran chaque fois que le dit premier signal est entré dans le moyen de lecture de données image.

2. L'appareil de décodage selon la revendication 1, comprenant de plus un moyen de génération de signal de contrôle (115) pour générer un signal de contrôle (206) qui instruit une nouvelle portion de données image décodées par le dit moyen de décodage, dans lequel le premier signal est sorti vers le dit moyen de génération de signal de contrôle par le dit moyen de décodage chaque fois qu'une sortie de données image d'une quantité prédéterminée de données image est complète et le dit moyen de génération de signal de contrôle sort le signal de contrôle chaque fois que le dit premier signal est en entrée.

3. Un appareil de décodage (101) pour décoder des données image codées (200) et sortir les dites données image obtenues sur un écran, le dit appareil de décodage comprenant :
un moyen de décodage (111) pour décoder des données codées obtenues par un système de codage dans lequel le nombre de trame par unité de temps varie ;
un moyen d'écriture de données image (112) pour écrire les dites données image (201), décodées par le dit moyen de décodage, dans une mémoire (113) ; et
un moyen de lecture de données image (114) pour lire les dites données image écrites dans la dite mémoire,
**caractérisé en ce que**
un premier signal (204) est sorti vers le dit moyen de lecture de données image par le dit moyen d'écriture chaque fois que l'écriture des dites données image d'une quantité prédéterminée de données image est complète,
le dit moyen de lecture de données image lit de façon intermittente les dites données image et sort les données image lues vers l'écran chaque fois que le dit premier signal est entré dans le moyen de lecture de données image.

4. L'appareil de décodage selon la revendication 3, comprenant de plus un moyen de génération de signal de contrôle (115) pour générer un signal de contrôle (206) qui instruit une nouvelle portion de données image décodées par le dit moyen de décodage, dans lequel le premier signal est sorti vers le dit moyen de génération de signal de contrôle par le dit moyen d'écriture chaque fois que l'écriture de la dite quantité prédéterminée de données image est complète et le dit moyen de génération de signal de contrôle sort le dit signal de contrôle chaque fois que le dit premier signal est en entrée.

5. L'appareil de décodage selon l'une des revendications 1 à 4 dans lequel l'appareil de décodage fait partie d'un terminal de communication radio.
